# EUROPEAN PATENT APPLICATION

(11) **EP 1 688 922 A2**
(43) Date of publication of application: **09.08.2006**
(21) Application number: 06001638.3
(22) Date of filing: 26.01.2006
(51) Int. Cl.: G11B 5/024

(54) **Method and system of erasing a data pool residing over multiple data storage drives**

(30) Priority: 31.01.2005 US 648649 P; 25.01.2006 US 339642 P
(71) Applicant: Broadcom Corporation, Irvine, CA 92618-7013 (US)
(72) Inventor: Wilson, Christopher S, 94085 Sunnyvale CA (US)
(74) Representative: Jehle, Volker Armin

(57) **Abstract**

Herein described are a method and a system for deleting a data pool generated by a data storage device. The data pool may be generated using a networked data storage device that comprises one or more data storage drives. The method may be implemented by way of erasing metadata associated with the data pool. The method may further comprise erasing data associated with the data pool wherein the data resides within one or more partition payloads of one or more partitions of one or more data storage drives. The system may be implemented using a memory, a software resident in the memory, and a processor for executing the software. When the processor executes the software, metadata associated with forming the data pool may be erased. Furthermore, any data stored in the data pool may be erased.

## Description

### CROSS-REFERENCE TO RELATED APPLICATIONS/INCORPORATION BY REFERENCE

This application makes reference to and claims priority from United States Provisional Patent Application Serial No. 60/648649, entitled "METHOD AND SYSTEM OF ERASING A DATA POOL RESIDING OVER MULTIPLE DATA STORAGE DRIVES" filed on January 31, 2005, the complete subject matter of which is incorporated herein by reference in its entirety.

This application makes reference to:

United States Application Serial No. 11/087136 filed March 22, 2005.

The above stated application is hereby incorporated herein by reference in its entirety.

### FEDERALLY SPONSORED RESEARCH OR DEVELOPMENT

[Not Applicable]
[MICROFICHE/COPYRIGHT REFERENCE]

[Not Applicable]

### BACKGROUND OF THE INVENTION

When one or more data pools are created using a data storage device, these data pools may need to be erased when data in a data pool is no longer needed. As a result, the available storage capacity may be increased when unused data is erased. However, when the one or more data pools are completely erased, the associated data becomes irrecoverable.

The limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Various aspects of the invention provide a system and method of deleting one or more data pools that are provided by a data storage device, substantially as shown in and/or described in connection with at least one of the following figures, as set forth more completely in the claims.
According to an aspect of the invention, a method of deleting a data pool is provided, said data pool generated by a data storage device, said method comprising:
(a) erasing metadata associated with said data pool.
   Advantageously, said metadata is used for concatenating one or more partition payloads to form said data pool.
   Advantageously, the method comprises writing one or more bits over said metadata.
   Advantageously, said metadata resides within one or more pool information blocks (PIBs).
   Advantageously, said metadata resides as one or more redundant copies in one or more partitions of one or more data storage drives of said data storage device.
   Advantageously, said one or more bits comprises a bit sequence of all zeroes.
   Advantageously, said one or more bits comprises a bit sequence of all ones.
   Advantageously, the method comprises:
(b) erasing data associated with said data pool, said data stored in one or more partition payloads, said data concatenated to form said data pool.
   Advantageously, (b) comprises writing one or more bits over said data.
   Advantageously, said one or more bits comprises a bit sequence of all zeroes.
   Advantageously, said one or more bits comprises a bit sequence of all ones.
   According to an aspect of the invention, a method of deleting a data pool is provided comprising:
   first erasing metadata associated with said data pool, said metadata residing within one or more pool information blocks of one or more partitions; and
   second erasing data stored in said data pool, said data residing within one or more partition payloads of said one or more partitions of one or more data storage drives of a data storage device.
   Advantageously, said one or more pool information blocks comprises one or more redundant pool information blocks.
   Advantageously, said first erasing comprises writing a sequence of high level bits.
   Advantageously, said first erasing comprises writing a sequence of low level bits.
   Advantageously, said second erasing comprises writing a sequence of high level bits.
   Advantageously, said second erasing comprises writing a sequence of low level bits.
   According to an aspect of the invention, a system for deleting a data pool is provided comprising:
   a memory;
   a software resident in said memory;
   a processor for executing said software, said data pool stored within one or more data storage drives of a data storage device, wherein executing said software erases metadata associated with said data pool.
   Advantageously, said executing said software further erases data stored in one or more partition payloads used to generate said data pool.

These and other advantages, aspects, and novel features of the present invention, as well as details of illustrated embodiments, thereof, will be more fully understood from the following description and drawings.

### BRIEF DESCRIPTION OF THE DRAWINGS

Figure 1 illustrates a block diagram of a typical system incorporating the use of a network attached storage device (NAS) in accordance with an embodiment of the invention.

Figure 2 is a block diagram of a network attached storage device (NAS) in accordance with an embodiment of the invention.

Figure 3 is a block diagram of a NAS chip (NASoC) in accordance with an embodiment of the invention.

Figure 4 is an operational flowchart illustrating one or more methods of erasing a data pool by way of executing a NAS software, in accordance with an embodiment of the invention.

### DETAILED DESCRIPTION OF THE INVENTION

Various aspects of the invention provide a system and method of deleting one or more data pools provided by a data storage device. A user may erase metadata and/or data that is used in generating the one or more data pools. The metadata and/or data may be erased by executing software resident in a memory of a data storage device. The user may perform either a "full erase" or a "quick erase" operation by making a selection using a web user interface, for example. By performing one of these erase operations, one or more data pools are deleted. Storage and retrieval of data in the one or more data pools may be affected, when one of these erase operations is performed.

Various aspects of the invention provide "full erase" functionality, in which the data and associated metadata of a data pool is erased or deleted. As a result of using the "full erase" operation, the presence of any residual data and/or metadata associated with the data pool is minimized. The metadata may comprise pool information data residing in one or more pool information blocks (PIBs) of one or more partitions of a data storage drive. The pool information data may comprise the name of the data pool, for example. The pool information data may be used to concatenate the data residing in one or more partitions, thereby forming a data pool. The pool information data may reside in a portion of a partition referred to as a pool information block (PIB). The data residing in the one or more partitions may be found in the payload portions of the one or more partitions. The payload portion of each of the one or more partitions may be alternatively referred to as a partition payload.

Various aspects of the invention provide "quick erase" functionality, in which the metadata of a data pool is erased. Erasing the metadata may prevent access to and/or retrieval of data, because the metadata provides information about layout and organization of the data that is stored in the payload portion of one or more partitions. As a consequence, the requested data may not be readily accessible; and as a consequence, expert knowledge and/or one or more tools may be required in order to retrieve the data. The one or more tools may comprise a software utility or application, for example.

Before performing an erase, one or more data pools may be created by executing software associated with a data storage device. The software may reside within memory of the data storage device. Execution of software may facilitate the creation of the one or more data pools. Each of the one or more data pools may comprise one or more shares or shared directories. One or more authorized members or users of a share may access that particular share. The data storage device may comprise one or more data storage drives, such as hard disk drives, or any other type of drive. The data storage device may comprise a combination of different types of data storage drives. A data storage drive may comprise any type of media capable of storing data. Hereinafter, the term "hard disk drive" alternatively may refer to a data storage drive or any drive or component comprising a media used to store data. In a representative embodiment, one or more data storage drives or hard disk drives may be incorporated into a data storage device. In a representative embodiment, the data storage device facilitates the incorporation of the one or more additional data storage drives or hard disk drives.

One or more data pools may be created using portions of one or more hard disk drives. The pools may be considered logical drives. The unallocated space over the one or more hard drives may be re-partitioned and then subsequently concatenated in order to generate a data pool. Portions of multiple hard disk drives may be used to create the data pool. For example, a portion of a first hard disk drive and a portion of a second hard disk drive may be used to form a data pool. In a representative embodiment, the hard disk drives are grouped together to provide increased data storage capacity and/or to provide data mirroring or data striping. In a representative embodiment, the grouped or linked hard disk drives are physically contained within a single data storage device. The data storage device may be networked in a local area network, for example, to provide a storage facility for any number of data processing or computing devices. The data processing or computing devices may comprise one or more computers. Additional aspects of the invention provide shared access by one or more users to the one or more data pools created in the storage device. A data pool may be accessed by one or more users by way of creating one or more shares. In a representative embodiment, a data pool may comprise one or more shares. Because the data storage device may provide a storage facility for one or more networked computing devices, the data storage device may be referred to as a network attached storage device (NAS).

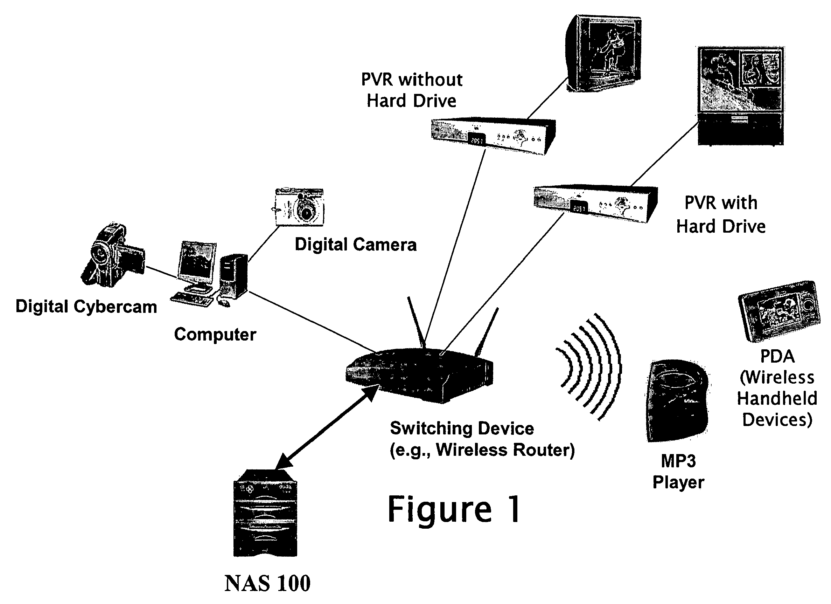

Figure 1 illustrates a block diagram of a typical system incorporating the use of a network attached storage device (NAS) 100 in accordance with an embodiment of the invention. The NAS 100 provides data storage for one or more data processing devices. As illustrated, an exemplary switching device provides connectivity of the NAS 100 to the one or more data processing devices. The switching device may be capable of providing connectivity using wireless or wireline communications. For example, a wireless router may utilize any one of the following wireless or wireline data communications protocols: 10/100 Ethernet, gigabit Ethernet, 802.11 x, Bluetooth, and the like. The one or more data processing devices comprise devices such as a digital cybercam, digital camera, MP3 player, PDA, or one or more personal video recorders (PVRs). As illustrated, the PVR may be equipped with or without a hard disk drive. In a representative embodiment, the PVR may be referred to as a set-top-box (STB) that incorporates personal video recorder capabilities. As a consequence, the PVR may be referred to as a PVR-STB. As shown, the PVRs are connected to a television or a monitor capable of displaying multimedia content to a user. Use of the NAS 100 provides a centralized storage device for multimedia content received by the one or more PVRs. As a consequence of storing content in a NAS 100, PVRs lacking a storage facility, such as a hard disk drive, may store any data it receives into the NAS 100. Further, any data stored by other data processing devices, including PVRs, may be easily accessed and viewed by any of the one or more data processing devices. For example, a PVR without hard drive may access multimedia content originally stored into the NAS 100 by a PVR with hard drive, and vice-versa. As a result, the NAS 100 facilitates sharing of data among the one or more data processing devices. Since it provides a remote storage mechanism, the NAS 100 may be considered a "virtual storage device" by the one or more data processing devices. The NAS 100 is configured such that its storage capacity may be easily expanded. For example, the NAS 100 may accept one or more additional hard disk drives. A NAS 100 may be configured to easily accept additional data storage drives, such as hard disk drives. An additional hard disk drive may be connected to the NAS 100 by using a suitable cable and/or connector. As such, the NAS 100 provides an easily scalable and flexible storage mechanism that accommodates for future data storage growth. In addition, the NAS 100 may provide data mirroring and data striping capabilities.

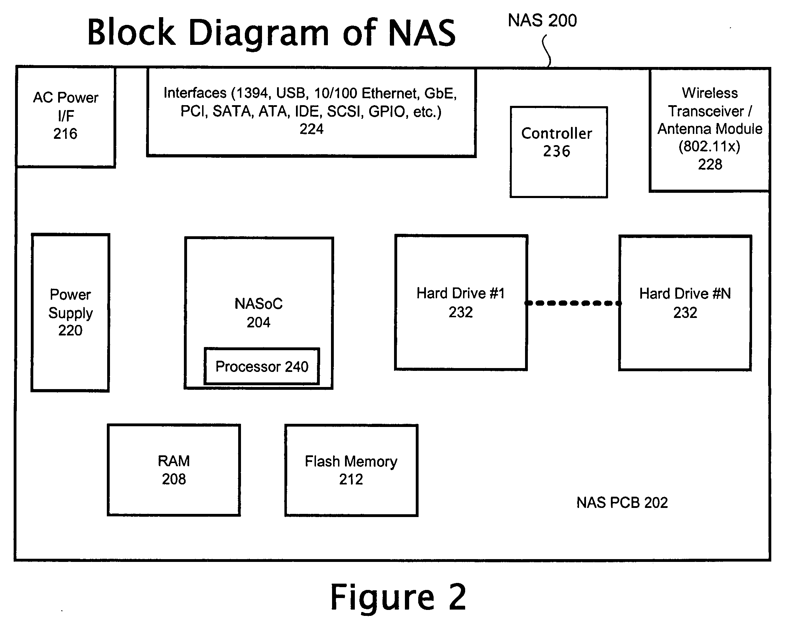

Figure 2 is a block diagram of a network attached storage device (NAS) 200 in accordance with an embodiment of the invention. The NAS 200 may comprise a printed circuit board (NAS PCB) 202 containing one or more components. The one or more components may be electrically connected by way of the printed circuit board (PCB) 202. The one or more components may comprise a NAS chip (NASoC) 204, a random access memory 208, a flash memory 212, an AC power interface 216, a power supply 220, a block of interfaces 224, a wireless transceiver / antenna module 228, one or more hard disk drives 232, and a controller 236. The interface block 224 may comprise one or more of the following interfaces: IEEE 1394, USB, 10/100 Ethernet, gigabit Ethernet, PCI, SATA, ATA, IDE, SCSI, GPIO, etc.. The wireless transceiver / antenna module 228 may comprise an attachable module or mini-PCI card that may be optionally connected or attached to the NAS' printed circuit board 202. The one or more hard disk drives 232 may comprise any number of hard drives depending on the design of the NAS 200. The printed circuit board 202 may be configured to accommodate an appropriate number of hard disk drives. The number of hard drives utilized may depend on the type of mirroring or data striping (i.e., RAID) provided by the NAS 200. Aspects of the invention provide a means to allocate one or more portions of one or more hard disk drives into a data pool. For example, portions of one drive may be concatenated with portions from another drive in order to create a data pool. Further aspects of the invention provide a method of expanding storage capacity by adding additional hard disk drives to the NAS. Additional aspects of the present invention include the implementation of data striping and/or data mirroring (i.e., implementation of various RAID level functionality) of one or more data pools using one or more drives of differing sizes and speeds. In one embodiment, the controller 236 provides control for any one of several devices (such as hard disk drives) connected to the NASoC 204. The NASoC 204 may comprise an integrated circuit chip incorporating a processor or central processing unit (CPU) 240. The NASoC 204 may comprise a digital integrated circuit chip capable of completely performing all NAS 200 related functions and operations.

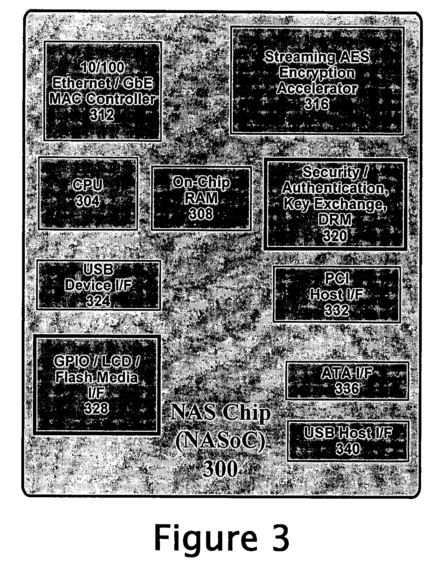

Figure 3 is a block diagram of a NAS chip (NASoC) 300 in accordance with an embodiment of the invention. NASoC 300 provides one or more functions that allow the NAS to properly operate. The NASoC 300 may comprise a central processing unit (CPU) 304, an on-chip random access memory 308, an Ethernet / MAC controller 312, an encryption accelerator 316, a security /authentication, key exchange, digital rights management (DRM) circuitry 320, and a number of interfaces 324, 328, 332, 336, 340. The interfaces 324, 328, 332, 336, 340 may comprise, for example, the following type of interfaces: USB device I/F 324, a PCI host I/F 332, a GPIO / LCD / flash media I/F 328, an ATA I/F 336, and a USB host I/F 340. The NAS chip 300 may communicate and/or connect to the one or more components described in reference to Figure 2.

Referring to Figure 2, the NAS 200 may incorporate varying numbers of hard disk drives depending on its data storage and RAID (data mirroring and/or striping) requirements. The NAS 200 chassis may be configured to incorporate 1, 2, 4, or more hard disk drives depending on type of use. For example, the NAS may utilize 4 hard disk drives for implementing RAID 0+1 (both data mirroring and data striping), suitable for use in a small office / business environment. Aspects of the invention provide for using hard disk drives of different capacities, types, and/or speeds when implementing RAID functions. The NAS may utilize only 1 or 2 hard disk drives in a home (or household) environment since the storage capacity utilized is typically less than that utilized in an office or business environment. Similarly, memory components utilized in the NAS may be varied depending on type of use. As the data storage requirements increase and as the frequency of data storage related requests increase, the performance of the NAS may be improved to meet its operational needs, by way of increasing memory size of the NAS. For example, flash or DRAM memory capacities may be increased in order to improve the processing performance of the NAS. Similarly, the chassis size, power circuitry, and other components may be adjusted to meet the processing requirements of its operational environment.

In a representative embodiment, the processor 240 within the NASoC (204 or 300) executes software or firmware (i.e., NAS software) residing within a memory, such as the RAM 208 or flash memory 212 or the one or more hard disk drives 232, when the NAS is booted up or powered up. In one embodiment, execution of the software or firmware generates one or more user interfaces allowing a user to erase one or more existing data pools that were written in one or more portions or partitions of one or more hard disk drives. The NAS software may be used to provide one or more algorithms or mechanisms for erasing or deleting the one or more data pools. The first mechanism comprises what is referred to as a "full erase", while the second mechanism comprises what is referred to as a "quick erase". During a "full erase", all data (including metadata) stored in a data pool becomes irrecoverable by way of writing different bit patterns over the existing data. As a result, all data pool data and its associated metadata are erased. During a "quick erase", the metadata stored in one or more partitions of one or more hard disk drives is erased. A data pool may reside over one or more partitions. The one or more partitions may reside over one or more data storage drives or hard disk drives. The "full erase" method may be slower but more secure while the "quick erase" method may be faster but less secure. One or more specific bit patterns may be used to write over the existing data or metadata in a data pool. Writing a bit pattern, such as all zeros (high level bits) or all ones (low level bits), or any other specific bit pattern, over any existing data or metadata in a data pool may appropriately erase the existing data stored in a data pool or prevent access to the existing data stored in the data pool.

During a "full erase", one or more data pool data and corresponding metadata is erased. The metadata provides information concerning the structure of a data pool. For example, the metadata provides the name of the pool and the partitions of one or more data storage drives that make up the data pool. Further, the metadata provides information on how the partitions are concatenated together to form the data pool. The data pool and metadata is potentially distributed across one or more partitions in one or more data storage drives (or hard disk drives). In a representative embodiment, the metadata for the data pool is located within pool information blocks (PIBs). Detailed information concerning the use and structure of pool information blocks (PIBs) may be found in U.S. patent application Serial No. 11/087136, entitled "METHOD AND SYSTEM OF DATA STORAGE CAPACITY ALLOCATION AND MANAGEMENT USING ONE OR MORE DATA STORAGE DRIVES", filed March 22, 2005, the complete subject matter of which is incorporated herein by reference in its entirety. The information coded within a PIB may be duplicated to provide two copies of this information within each partition of a hard disk drive. In a representative embodiment, the two copies may be referred to as PIB Copy A and PIB Copy B.

In a representative embodiment, executing the NAS software invokes a pool erasure algorithm used for erasing the metadata associated with one or more data pools. The pool erasure algorithm first zeros out (or sets all data bits to zero) all Copy A PIBs for all partitions in a hard disk drive. Thereafter, the pool erasure algorithm zeros out all the Copy B PIBs. The use of duplicate or redundant copies is beneficial if the NAS is interrupted since one copy will be in a consistent or stable state when the interruption has ended. The interruption, for example, may comprise a temporary power failure. As a consequence, the data pool may be properly regenerated when the NAS system emerges from the power failure. The NAS may identify a PIB that is in the process of being zeroed out and will consider its associated data pool to be an incomplete or unavailable data pool until all metadata within the PIB is zeroed out. In a representative embodiment, the partition tables in the hard disk drive are not modified during the data pool erasure process. The partition tables may be modified when the space is re-allocated or available. When performing a "quick erase", the process is complete when both copies (PIB Copy A and PIB Copy B) of the metadata in the Pool Information Blocks have all bits set equal to zero (i.e., have been zeroed out). In a representative embodiment, when performing a "full erase", the contents of the entire data pool (its data and associated metadata) is written with all zeros. Thereafter, the entire data pool is written with all ones. The entire data pool may be subsequently rewritten one or more times with all zeros and/or all ones, repeatedly. As a consequence, the "full erase" method minimizes the risk that any residual information may be available to any user. It is contemplated that in other embodiments, multiple redundant copies of pool information blocks may be stored within a partition of a data storage drive or hard disk drive.

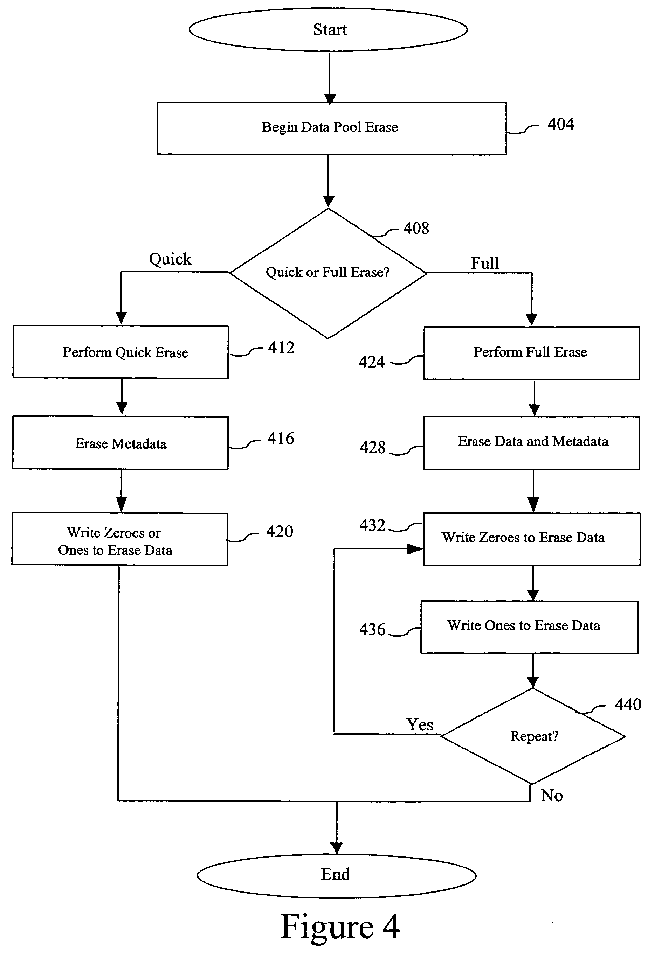

Figure 4 is an operational flowchart illustrating one or more methods of erasing a data pool by way of executing a NAS software, in accordance with an embodiment of the invention. At step 404, a user may begin a data pool erase by way of executing the NAS software. The data pool erase may commence when a user inputs an appropriate command using a web user interface or graphical user interface. The command may be input by clicking on a button on the web user interface or graphical user interface using a mouse, for example. At step 408, the user may select whether a quick or full erase is performed. The selection may be made by clicking on a selection button provided by the user interface. If the user clicks the quick erase button, at step 412, the NAS software is executed to perform a quick erase. One or more appropriate data pools may be selected by way of the user interface. At step 416, metadata associated with the one or more data pools may be erased. At step 420, the continued execution of the NAS software invokes a pool erasure algorithm. The pool erasure algorithm may be set to write all zeros over one or more portions or partitions of one or more data storage drives (or hard disk drives) associated with the one or more data pools selected. The pool erasure algorithm may be set to write all ones over one or more portions or partitions of the one or more data storage drives associated with the one or more data pools selected. In a representative embodiment, all metadata associated with the one or more data pools is erased by writing either all ones or all zeros onto the one or more partitions of one or more hard disk drives. The metadata may be located within the one or more partitions of the one or more data storage drives or hard disk drives, for example. The metadata may be located with pool information blocks (PIBs) of the one or more partitions. Each of the one or more partitions may comprise (or may be associated with) two identical or redundant PIBs. If, at step 408, the user selects that a full erase is to be performed, the process continues with step 424. At step 424, the NAS software is executed to perform a full erase. Thereafter, at step 428, data and metadata associated with the one or more data pools may be erased. The data may comprise one or more data files stored in the one or more data pools. At step 432, the continued execution of the NAS software invokes a pool erasure algorithm. The pool erasure algorithm may be set to write all zeros over its associated one or more partitions of the one or more data pools selected. At step 436, the pool erasure algorithm may be set to write all ones over its associated one or more partitions of the one or more data pools selected. Next, at step 440, the NAS software determines whether to repeat writing of the zeros and ones onto the one or more partitions. The number of additional times the zeros and ones are written over the one or more partitions may be determined by a user's input into the user interface. In a representative embodiment, all data and metadata associated with the one or more data pools is erased by successively writing various bit patterns in a pre-defined manner. For example, a pattern of zeroes may be initially written over the one or more partitions of one or more hard disk drives. Thereafter, a pattern of ones may be written over the one or more partitions. The writing may be performed one or more times using various bit patterns (instead of all ones or all zeroes). The number of writes and type of bit patterns used may be based on user preference. Based on the type of data stored, a user may wish to minimize the risk that any residual data pool data remains within the one or more partitions of the one or more hard disk drives. Again, the metadata may be located within a portion of the one or more partitions, for example. The metadata may be located with pool information blocks (PIBs) of the one or more partitions.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiments disclosed, but that the invention will include all embodiments falling within the scope of the appended claims.

## Claims

1. A method of deleting a data pool, said data pool generated by a data storage device, said method comprising:
(a) erasing metadata associated with said data pool.

2. The method of Claim 1 wherein said metadata is used for concatenating one or more partition payloads to form said data pool.

3. The method of Claim 1 wherein (a) comprises writing one or more bits over said metadata.

4. The method of Claim 1 wherein said metadata resides within one or more pool information blocks (PIBs).

5. The method of Claim 1 wherein said metadata resides as one or more redundant copies in one or more partitions of one or more data storage drives of said data storage device.

6. A method of deleting a data pool comprising:
first erasing metadata associated with said data pool, said metadata residing within one or more pool information blocks of one or more partitions; and
second erasing data stored in said data pool, said data residing within one or more partition payloads of said one or more partitions of one or more data storage drives of a data storage device.

7. The method of Claim 6 wherein said one or more pool information blocks comprises one or more redundant pool information blocks.

8. The method of Claim 6 wherein said first erasing comprises writing a sequence of high level bits.

9. A system for deleting a data pool comprising:
a memory;
a software resident in said memory;
a processor for executing said software, said data pool stored within one or more data storage drives of a data storage device, wherein executing said software erases metadata associated with said data pool.

10. The system of Claim 9 wherein said executing said software further erases data stored in one or more partition payloads used to generate said data pool.
